# EUROPEAN PATENT APPLICATION

(11) **EP 4 742 235 A1**
(43) Date of publication of application: **13.05.2026**
(21) Application number: 24844313.7
(22) Date of filing: 29.04.2024
(51) Int. Cl.: G10L 13/033, G10L 25/69

(54) **METHOD FOR GENERATING VOICE CLONING MODEL, AND RELATED APPARATUS**

(30) Priority: 27.07.2023 CN 202310934184; 28.09.2023 CN 202311278704
(71) Applicant: Huawei Cloud Computing Technologies Co., Ltd., Guiyang, Guizhou, 550025 (CN)
(72) Inventor: CHEN, Feiyang, Guiyang, Guizhou 550025 (CN); WANG, Zhefeng, Guiyang, Guizhou 550025 (CN); HUAI, Baoxing, Guiyang, Guizhou 550025 (CN); DAI, Zonghong, Guiyang, Guizhou 550025 (CN)
(74) Representative: Goddar, Heinz J.
(86) International application number: PCT/CN2024/090542
(87) International publication number: WO 2025/020617

(57) **Abstract**

This application provides a voice cloning model generation method and a related apparatus. The method is applied to a voice cloning field, and includes: obtaining results, input by a user via a terminal device, of scoring a plurality of pieces of reference audio; performing training based on the plurality of pieces of reference audio and the results of scoring the plurality of pieces of reference audio by the user, to obtain an acoustic feedback unit, where the acoustic feedback unit is configured to measure auditory feeling of the user for different pieces of audio; obtaining a first voice data set that is input by the user via the terminal device; and training a voice cloning model based on the first voice data set and the acoustic feedback unit, and obtaining a voice cloning model. In a process of training the voice cloning model, in consideration of preference of the user for different pieces of audio, the results of scoring the plurality of pieces of reference audio by the user are added to the process of training the voice cloning model. The voice cloning model obtained through training better matches user requirements, and a voice generated using the trained voice cloning model can better match user's auditory feeling.

## Description

This application claims priorities to Chinese Patent Application No. 202310934184.8, filed with the China National Intellectual Property Administration on July 27, 2023 and entitled "VOICE CLONING METHOD AND RELATED APPARATUS", and to Chinese Patent Application No. 202311278704.0, filed with the China National Intellectual Property Administration on September 28, 2023 and entitled "VOICE CLONING MODEL GENERATION METHOD AND RELATED APPARATUS", both of which are incorporated herein by reference in their entireties.

### TECHNICAL FIELD

This application relates to the voice cloning field, and in particular, to a voice cloning model generation method and a related apparatus.

### BACKGROUND

In recent years, with the rapid development of industries such as virtual human, audiobook, and video creation, more repetitive dubbing tasks are replaced by synthesized voice. Voice cloning, as a voice synthesis technology for cloning timbre, prosody, and styles of a target speaker, meets requirements for voice synthesis.

Currently, voice cloning systems typically extract dozens of or hundreds of pieces of recording data required for cloning training, and cloning engines learn target speaker's pronunciation styles, prosody, and timbre, and other characteristics from the provided recording data. Although timbre and speaking styles of cloned voice are basically consistent with the target speaker's timbre and speaking styles in the recording, the cloned voice often fails to satisfy users' auditory feeling.

### SUMMARY

This application provides a voice cloning model generation method and a related apparatus. A voice generated by using the voice cloning model generation method in this application can better match auditory feeling of a user, thereby improving user experience.

According to a first aspect, this application provides a voice cloning model generation method, including: obtaining results, input by a user via a terminal device, of scoring a plurality of pieces of reference audio; performing training based on the plurality of pieces of reference audio and the results of scoring the plurality of pieces of reference audio by the user, to obtain an acoustic feedback unit, where the acoustic feedback unit is configured to measure auditory feeling of the user for different pieces of audio; obtaining a first voice data set that is input by the user via the terminal device; and training a voice cloning model based on the first voice data set and the acoustic feedback unit, and obtaining a trained voice cloning model.

In a process of training the voice cloning model, in consideration of user's requirements and preference, the results of scoring the plurality of pieces of reference audio by the user are added to the process of training the voice cloning model, so that the voice cloning model obtained through training can better meet the user requirements. When used in a voice synthesis service scenario, the trained voice cloning model can better match user's auditory feeling.

According to the first aspect, in a possible implementation, before the obtaining the results, input by the user via the terminal device, of scoring the plurality of pieces of reference audio, the method further includes: obtaining feedback information input by the user via the terminal device, where the feedback information includes one or more of an application scenario of the voice cloning model, an emotion category used for the voice cloning model, and a language generated by the voice cloning model; obtaining the plurality of pieces of reference audio from an audio library through filtering based on the feedback information; and sending the plurality of pieces of reference audio to the terminal device.

Further, the plurality of pieces of reference audio are obtained through filtering based on the feedback information input by the user. Therefore, based on the feedback information input by the user and the results of scoring the plurality of pieces of reference audio by the user, the voice cloning model obtained through training can better meet the user requirements, and a voice generated by using the trained voice cloning model can better match user's auditory feeling.

According to the first aspect, in a possible implementation, the training the voice cloning model based on the first voice data set and the acoustic feedback unit includes a plurality of rounds of iterative training.

In a current round of iterative training,
the voice cloning model generates an optimized voice; and
the optimized voice is input into the acoustic feedback unit, where the acoustic feedback unit scores the optimized voice to obtain a result of scoring the optimized voice, and the result of scoring the optimized voice is used as an input of the voice cloning model in a next round of iterative training, to influence the voice cloning model in generating an optimized voice in the next round.

In a 1^{st} round of iterative training, the optimized voice is generated by the voice cloning model based on the first voice data set.

The training the voice cloning model is a process of performing reinforcement learning on the acoustic feedback unit and the voice cloning model. The acoustic feedback unit is obtained by performing training based on the feedback information of the user and the results of scoring the plurality of pieces of reference audio by the user. The acoustic feedback unit can reflect and represent preference of the user for different pieces of audio. Therefore, the acoustic feedback unit may be used as a basis for determining whether an optimized voice generated by a voice cloning unit matches the auditory feeling of the user. In other words, the acoustic feedback unit may be configured to score the optimized voice generated by the voice cloning unit, and the scoring result is used as an input of the voice cloning unit, to influence the voice cloning unit in generating an optimized voice in a new round.

According to the first aspect, in a possible implementation, in the current round of iterative training, the result of scoring the optimized voice is used as a parameter in a loss function of the voice cloning model in the next round of iterative training, to influence the loss function of the voice cloning model.

According to the first aspect, in a possible implementation, the voice cloning model is used in any one or more of an audiobook scenario, a virtual human field, or a video creation field.

According to the first aspect, in a possible implementation, after the obtaining the trained voice cloning model, the method further includes:

A server receives target information input by the user, where the target information includes text.

The server inputs the target information into the trained voice cloning model, to generate a second voice.

According to the first aspect, in a possible implementation, the target information exists in the form of any one or a combination of a document, a picture, or a slide.

According to the first aspect, in a possible implementation, the results of scoring the plurality of pieces of reference audio include results of scoring all of the plurality of pieces of reference audio in a plurality of dimensions, and the plurality of dimensions include two or more dimensions of timbre, voice prosody, pronunciation, and articulation.

According to a second aspect, this application provides a voice cloning model generation apparatus, including:
an obtaining module, configured to obtain results, input by a user via a terminal device, of scoring a plurality of pieces of reference audio;
an acoustic feedback module, configured to perform training based on the plurality of pieces of reference audio and the results of scoring the plurality of pieces of reference audio by the user, to obtain an acoustic feedback unit, where the acoustic feedback unit is configured to measure auditory feeling of the user for different pieces of audio, where
the obtaining module is configured to obtain a first voice data set that is input by the user via the terminal device; and
a voice cloning module, configured to: train a voice cloning model based on the first voice data set and the acoustic feedback unit, and obtain a trained voice cloning model.

According to the second aspect, in a possible implementation,
the obtaining module is further configured to obtain feedback information input by the user via the terminal device, where the feedback information includes one or more of an application scenario of the voice cloning model, an emotion category used for the voice cloning model, and a language generated by the voice cloning model.

A filtering module is configured to obtain the plurality of pieces of reference audio from an audio library through filtering based on the feedback information.

A sending module is configured to send the plurality of pieces of reference audio to the terminal device.

According to the second aspect, in a possible implementation, the training the voice cloning model based on the first voice data set and the acoustic feedback unit includes a plurality of rounds of iterative training.

In a current round of iterative training,
the voice cloning module is configured to generate an optimized voice; and
the acoustic feedback module is configured to input the optimized voice into the acoustic feedback unit, where the acoustic feedback unit scores the optimized voice to obtain a result of scoring the optimized voice, and the result of scoring the optimized voice is used as an input of the voice cloning model in a next round of iterative training, to influence the voice cloning model in generating an optimized voice in the next round.

In a 1^{st} round of iterative training, the optimized voice is generated by the voice cloning model based on the first voice data set.

According to the second aspect, in a possible implementation, in the current round of iterative training, the result of scoring the optimized voice is used as a parameter in a loss function of the voice cloning model in the next round of iterative training, to influence the loss function of the voice cloning model.

According to the second aspect, in a possible implementation, the voice cloning model is used in any one or more of an audiobook scenario, a virtual human field, or a video creation field.

According to the second aspect, in a possible implementation,
the obtaining module is further configured to receive target information input by the user, where the target information includes text.

The voice cloning module is further configured to input the target information into the trained voice cloning model, to generate a second voice.

According to the second aspect, in a possible implementation, the target information exists in the form of any one or a combination of a document, a picture, or a slide.

According to the second aspect, in a possible implementation, the results of scoring the plurality of pieces of reference audio include results of scoring all of the plurality of pieces of reference audio in a plurality of dimensions, and the plurality of dimensions include two or more dimensions of timbre, voice prosody, pronunciation, and articulation.

Functional modules in the second aspect are configured to implement the method according to any one of the first aspect and the possible implementations of the first aspect.

According to a third aspect, this application provides a computing device cluster, including at least one computing device. The at least one computing device each includes a memory and a processor, and the processor of the at least one computing device is configured to execute instructions stored in the memory of the at least one computing device, to enable the computing device cluster to perform the method according to any one of the first aspect and the possible implementations of the first aspect.

According to a fourth aspect, this application provides a computer-readable storage medium, including program instructions. When the program instructions are executed by a computing device cluster, the computing device cluster performs the method according to any one of the first aspect and the possible implementations of the first aspect.

According to a fifth aspect, this application provides a computer program product including instructions. When a computing device cluster runs the instructions, the computing device cluster performs the method according to any one of the first aspect and the possible implementations of the first aspect.

### BRIEF DESCRIPTION OF DRAWINGS

FIG. 1 is a diagram of a system architecture according to this application;
FIG. 2 is a schematic flowchart of a voice cloning model generation method according to this application;
FIG. 3 is a diagram of a method for training a voice cloning model according to this application;
FIG. 4 is a schematic flowchart of a method for training an acoustic feedback unit according to this application;
FIG. 5 is an example diagram of feedback information according to this application;
FIG. 6 is an example diagram of a plurality of pieces of reference audio and corresponding scoring standards according to this application;
FIG. 7 is another example diagram of a plurality of pieces of reference audio and corresponding scoring standards according to this application;
FIG. 8 is a diagram of performing reinforcement learning and training on a voice cloning model according to this application;
FIG. 9 is a schematic flowchart of a method for applying a voice cloning model according to this application;
FIG. 10 is a diagram of a structure of a voice cloning model generation apparatus according to this application;
FIG. 11 is a diagram of a structure of a computing device according to this application;
FIG. 12 is a diagram of a structure of a computing device cluster according to this application; and
FIG. 13 is a diagram of a structure of another computing device cluster according to this application.

### DESCRIPTION OF EMBODIMENTS

For ease of description and understanding of the solutions, in this application, "first", "second", and the like are used for distinguishing between same objects, and "first", "second", and the like are not intended for specific reference. "/" indicates an "or" relationship. For example, A/B indicates A or B.

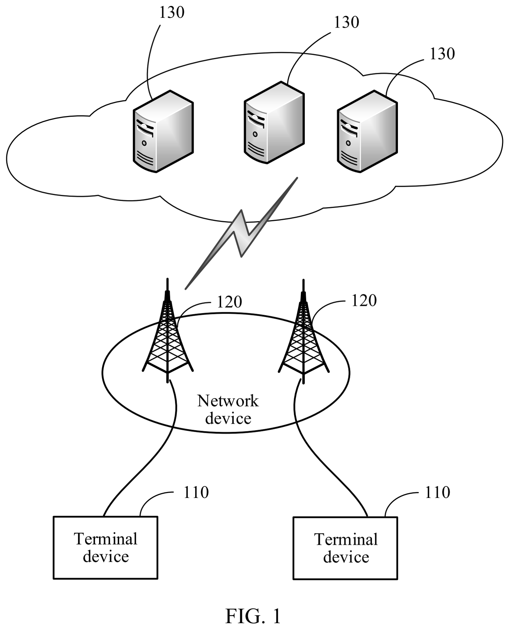

This application provides a system. FIG. 1 is a diagram of a system architecture according to this application. The system includes a terminal device 110, a network device 120, and at least one server 130.

For example, the terminal device 110 may be any one of electronic products such as a notebook computer, a desktop computer, a tablet computer, and a wearable device. Alternatively, the terminal device 110 may be another electronic device, for example, an intelligent robot. A user may input feedback information and a first voice data set via the terminal device 110, and the terminal device 110 is configured to receive the feedback information and the first voice data set that are input by the user. The terminal device 110 is further configured to send, to the at least one server 130 via the network device 120, the feedback information and the first voice data set that are input by the user. For related descriptions of the feedback information and the first voice data set, refer to descriptions in the following method embodiments. Details are not described herein again.

The network device 120 is configured for data transmission between the terminal device 110 and the server 130 via a communication network with any communication mechanism/communication standard. The communication network may be in the form of a wide area network, a local area network, a point-to-point connection, or the like, or any combination thereof. In this application, the network device 120 is configured to: receive the feedback information and the first voice data set that are sent by the terminal device 110, and send the feedback information and the first voice data set to the at least one server 130.

The server 130 may be a computing device located in a cloud, where the cloud may be a private cloud, a public cloud, or a hybrid cloud, and the cloud includes one or more servers 130. In this application, the server 130 is configured to receive the feedback information and the first voice data set that are sent by the terminal device 110, and is further configured to perform a series of processing based on the feedback information and the first voice data set, to finally obtain a voice cloning model. For the voice cloning model, refer to descriptions in the following method embodiments. Details are not described herein.

The obtained voice cloning model may be used to process a voice synthesis service (text-to-speech service, TTS service, which is also referred to as a "text-to-voice" service).

The following describes application scenarios to which the voice cloning model is applicable.

Embodiments of this application may be applied to an audiobook scenario. For example, a user may input information in newspaper, a magazine, a paper novel, or an electronic novel into a server via a terminal device, the server processes the information in the newspaper, the magazine, the paper novel, or the electronic novel to obtain a voice, and sends the voice to the terminal device. After receiving the voice, the terminal device broadcasts the voice, so that the user does not need to manually browse through the newspaper, the magazine, the paper novel, or the electronic novel, or visually read content of the newspaper, the magazine, the paper novel, or the electronic novel, and can "read" the newspaper, the magazine, the paper novel, or the electronic novel through hearing, freeing hands of the user and bringing convenience to the user.

Embodiments of this application may be further applied to the virtual human field. For example, a virtual human may be a digital human with a virtual image, or may be an intelligent robot. For example, a digital human or a robot may be used to provide a service for a user. In a process in which the digital human or the robot provides the service for the user, the digital human or the robot may provide the service for the user by using a voice that is synthesized by the server and that is preferred by the user. For another example, the user inputs information in newspaper, a magazine, a paper novel, or an electronic novel into a digital human or a robot, and uses the digital human or the robot to play content of the voice for the user.

Embodiments of this application may be further applied to the video creation field. For example, when a user creates a video, a voice needs to be added to a video picture, where the voice is used to assist in understanding video content. In this case, the user inputs, into a server in the form of text via a terminal device, the voice that needs to be added. The server converts the text into a voice that matches preference of the user, and sends, to the terminal device, the voice that matches the preference of the user. The user adds the voice to the video, so that the voice that matches the preference of the user is played together with the video picture.

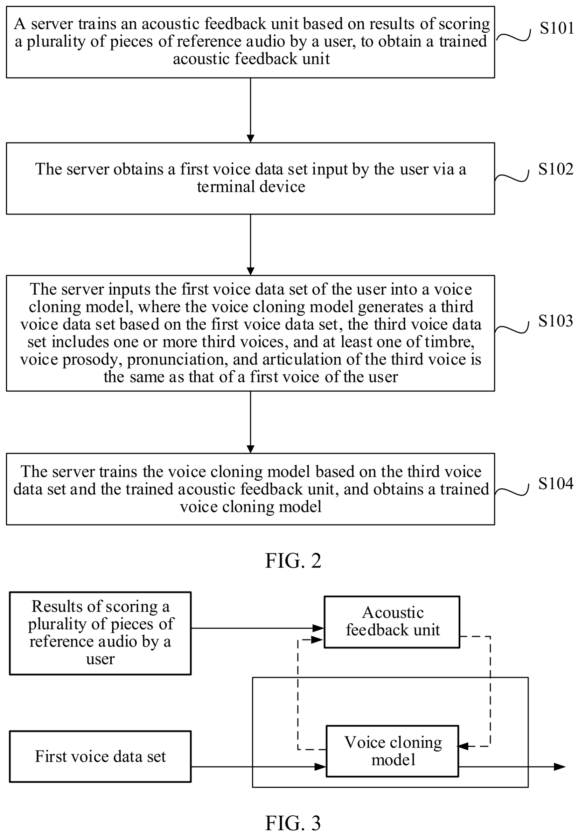

Based on the system shown in FIG. 1, this application provides a voice cloning model generation method. FIG. 2 is a schematic flowchart of a voice cloning model generation method according to this application. FIG. 3 is a diagram of a method for training a voice cloning model according to this application. The following describes the voice cloning model generation method according to this application with reference to FIG. 2 and FIG. 3. The method includes but is not limited to descriptions of the following content.

S101: A server trains an acoustic feedback unit based on results of scoring a plurality of pieces of reference audio by a user, to obtain a trained acoustic feedback unit.

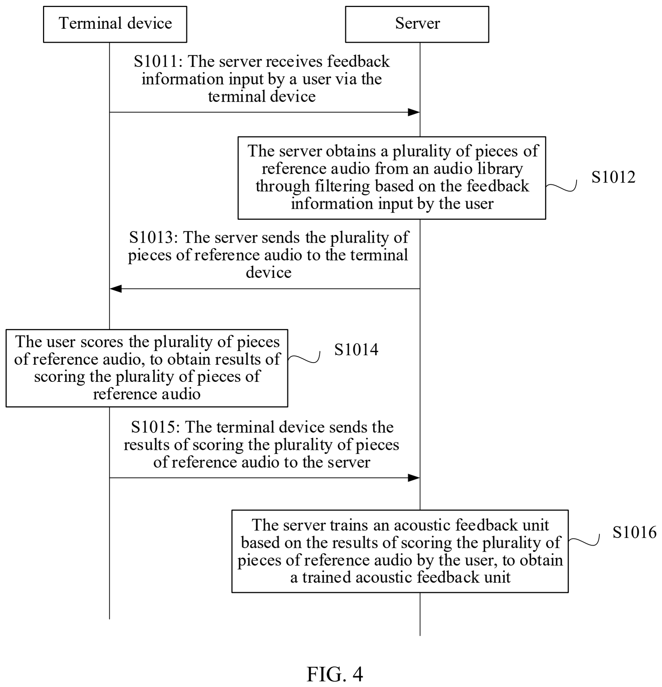

In an implementation, the user may input feedback information into the server via a terminal device, and the server performs training based on the feedback information input by the user and the results of scoring the plurality of pieces of reference audio by the user, to obtain the trained acoustic feedback unit. The following describes a specific implementation method of this implementation. FIG. 4 is a schematic flowchart of a method for training an acoustic feedback unit according to this application. The method includes but is not limited to descriptions of the following content of S1011 to S1016.

S1011: The server receives the feedback information input by the user via the terminal device.

The feedback information input by the user includes one or more of an application scenario of a voice cloning model, an emotion category used for the voice cloning model, and a language generated by the voice cloning model. The application scenario of the voice cloning model includes a news scenario, a live broadcast scenario, a story scenario, an education scenario, a conversation scenario, a general scenario, and the like. The news scenario is a scenario for news broadcasting, that is, a voice cloning model subsequently generated by the server is used for a scenario for news broadcasting. The live broadcast scenario means that a subsequently generated voice cloning model is used in a scenario for live broadcasting. The story scenario means that a subsequently generated voice cloning model is used in a scenario for telling a story. The education scenario means that a subsequently generated voice cloning model is used in a scenario related to education and teaching. The conversation scenario means that a subsequently generated voice cloning model is used in a scenario for a conversation between characters. The general scenario means that a subsequently generated voice cloning model may be used in a plurality of scenarios. The application scenario may further include another scenario. This is not limited in this application.

The emotion category for the voice cloning model is an emotion category used for voice broadcast by using the voice cloning model, and the emotion category includes happiness, anger, seriousness, sadness, surprise, a neutral emotion, and the like. For example, in the news scenario, the emotion of seriousness may be selected for voice broadcast. In the live broadcast scenario, the emotion of happiness may be selected for voice broadcast. The emotion category may further include another emotion or mood. This is not limited in this application.

The language generated by the voice cloning model is a language used for voice broadcast by using the voice cloning model, for example, may include Putonghua, a dialect, and a foreign language. The dialect may further include dialects of a plurality of regions, and the foreign language may further include languages of a plurality of countries. The user may select a language for the voice cloning model based on an actual application scenario and an application requirement.

The feedback information input by the user may further include other information. This is not specifically limited in this application.

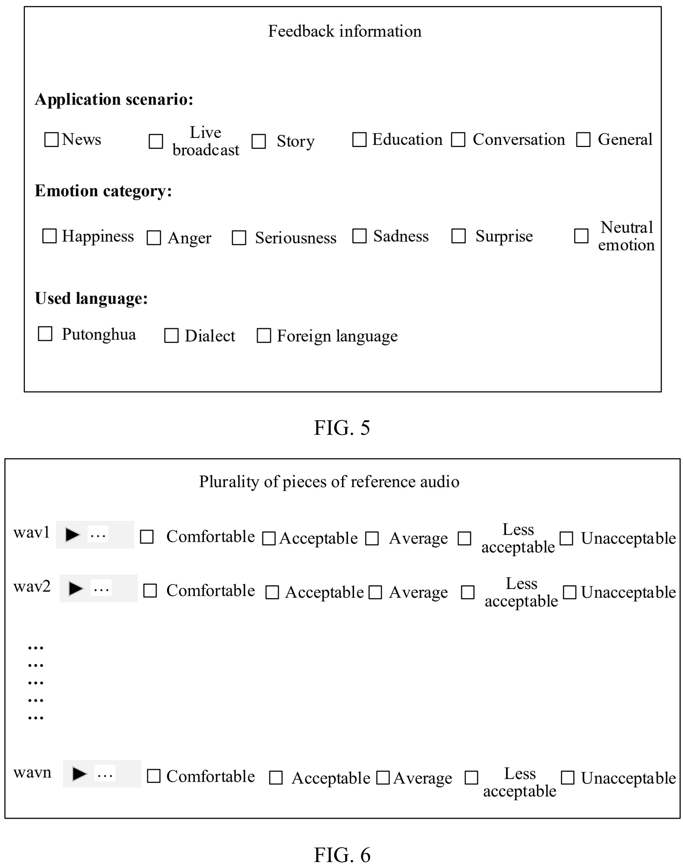

FIG. 5 is an example diagram of feedback information according to this application. In FIG. 5, the feedback information includes an application scenario of a voice cloning model, an emotion category used for the voice cloning model, and a language generated by the voice cloning model. The application scenario includes a news scenario, a live broadcast scenario, a story scenario, an education scenario, a conversation scenario, and a general scenario; the emotion category includes happiness, anger, seriousness, sadness, surprise, and a neutral emotion; and the language includes Putonghua, a dialect, and a foreign language. A user may select a corresponding application scenario, emotion category, and language based on an actual application requirement. Optionally, the user may select one or more application scenarios, or one or more emotion categories, or one or more languages based on the actual application requirement.

The user inputs the feedback information via the terminal device, and the terminal device sends the feedback information to the server. Correspondingly, the server receives the feedback information sent by the user.

S1012: The server obtains a plurality of pieces of reference audio from an audio library through filtering based on the feedback information input by the user.

The audio library is provided in the server. The audio library includes pieces of audio of a plurality of application scenarios, a plurality of emotion categories, and a plurality of different language versions. Sources of the pieces of audio in the audio library include capture of voices of different persons, and further include performing synthesis on the voices of different persons. The audio includes a voice.

The server obtains, through filtering from the audio library based on the feedback information input by the user, a plurality of pieces of reference audio that meet a user condition, where the user condition includes an application scenario, an emotion category, and a language that are selected by the user and that are in the feedback information. It can be learned that the plurality of pieces of reference audio are obtained through filtering based on user requirements.

S1013: The server sends the plurality of pieces of reference audio to the terminal device. Correspondingly, the terminal device receives the plurality of pieces of reference audio sent by the server.

S1014: The user scores the plurality of pieces of reference audio, to obtain results of scoring the plurality of pieces of reference audio.

After the terminal device receives the plurality of pieces of reference audio that are sent by the server and that are obtained through filtering based on the feedback information of the user, the user plays the plurality of pieces of reference audio on the terminal device, and separately scores the plurality of pieces of reference audio based on auditory feeling, to obtain a result of scoring each of the plurality of pieces of reference audio.

In an implementation, scoring standards for each piece of reference audio include: comfortable, acceptable, average, less acceptable, and unacceptable. The user separately scores each piece of reference audio based on auditory feeling for each piece of reference audio, and a scoring result is one of the scoring standards. In another implementation, scoring standards for each piece of reference audio include 1 point, 2 points, 3 points, 4 points, and 5 points, and a result of scoring each piece of reference audio is one of the scoring standards.

FIG. 6 is an example diagram of a plurality of pieces of reference audio and corresponding scoring standards according to this application. In FIG. 6, the plurality of pieces of reference audio include wav1, wav2, wav3, ..., wavn, where n is a positive integer. For each piece of reference audio, there are five-level scoring standards: comfortable, acceptable, average, less acceptable, and unacceptable. The user may score each piece of reference audio based on auditory feeling for the reference audio, to obtain a result of scoring each piece of reference audio.

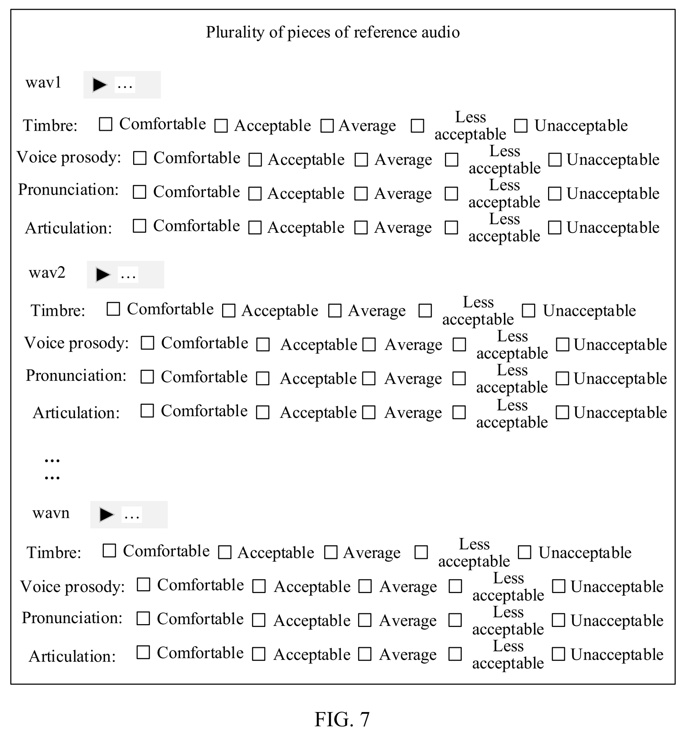

In another implementation, a scoring standard for each piece of reference audio may include a plurality of dimensions. For example, for one piece of reference audio, the scoring standard includes two or more dimensions of timbre, voice prosody, pronunciation, and articulation. The user separately performs scoring based on dimensions of the scoring standard to obtain results of scoring the reference audio, where the scoring results include scores for the plurality of dimensions. For example, refer to an example diagram shown in FIG. 7. FIG. 7 includes a plurality of pieces of reference audio, and a scoring standard of each piece of reference audio includes four dimensions: timbre, voice prosody, pronunciation, and articulation. For one piece of reference audio, the user may score, based on auditory feeling for the reference audio, the reference audio in the four dimensions: timbre, voice prosody, a pronunciation manner, and an articulation manner, to obtain results of scoring one piece of reference audio.

In another implementation, for one piece of reference audio, results of scoring one piece of reference audio in a plurality of dimensions may be aggregated into one scoring result. In other words, in FIG. 7, after the user scores one piece of reference audio in four dimensions: timbre, voice prosody, a pronunciation manner, and an articulation manner, the terminal device displays an aggregated scoring result, and the scoring result is a value. The scoring results for the four dimensions are aggregated to obtain a total scoring result. This calculation process may be completed by the terminal device, or may be completed by the server. In this application, the scoring standard and the scoring result may alternatively be in another form. This is not limited in this application.

S1015: The terminal device sends the results of scoring the plurality of pieces of reference audio to the server, and correspondingly, the server receives the results that are of scoring the plurality of pieces of reference audio and that are sent by the terminal device.

S1016: The server trains the acoustic feedback unit based on the results of scoring the plurality of pieces of reference audio by the user, to obtain a trained acoustic feedback unit.

The server trains the acoustic feedback unit based on the plurality of pieces of reference audio and a result of scoring each of the plurality of pieces of reference audio. Specifically, the server may extract a feature of each of the plurality of pieces of reference audio, train the acoustic feedback unit based on the feature and the corresponding scoring result that are of each piece of reference audio, and finally obtain the trained acoustic feedback unit.

Optionally, the server further includes a corresponding result of scoring each piece of audio in the audio library, and the result of scoring each piece of audio in the audio library is obtained by separately scoring each piece of audio in the audio library by a plurality of different users. The server may first perform pre-training based on all the pieces of audio in the audio library and at least one scoring result corresponding to each piece of audio. After the pre-training, the server performs training based on the plurality of pieces of reference audio and the result of scoring each of the plurality of pieces of reference audio by the user, and finally obtains the trained acoustic feedback unit.

It can be seen that the acoustic feedback unit is obtained through training based on the plurality of pieces of reference audio and the results of scoring the plurality of pieces of reference audio by the user, where the plurality of pieces of reference audio are obtained through filtering based on the feedback information of the user. Therefore, the trained acoustic feedback unit reflects and represents preference of the user for different pieces of audio, and therefore, the trained acoustic feedback unit may be used as a model or standard for determining the preference of the user for different pieces of audio, and is configured to measure auditory feeling of the user for different pieces of audio. For example, a piece of audio is input into the trained acoustic feedback unit, and the trained acoustic feedback unit may extract a feature of the audio, and score the audio based on the extracted feature of the audio, to obtain a result of scoring the audio, where the result of scoring the audio reflects a degree of preference of the user for the audio.

In another implementation, the user does not need to input the feedback information, and the server directly sends the plurality of pieces of reference audio to the terminal device. The user scores the plurality of pieces of reference audio via the terminal device, and the terminal device sends scoring results to the server. The server trains the acoustic feedback unit based on the results of scoring the plurality of pieces of reference audio by the user, to obtain the trained acoustic feedback unit. The trained acoustic feedback unit reflects and represents preference of the user for different pieces of audio. Therefore, the trained acoustic feedback unit may be used as a model or standard for determining the preference of the user for different pieces of audio, and is configured to measure auditory feeling of the user for different pieces of audio.

S102: The server obtains a first voice data set that is input by the user via the terminal device.

The first voice data set includes one or more first voices of the user, and the first voice may be a voice recorded by the user via the terminal device, or may be a voice that is of the user and that is obtained in another manner. The user sends the first voice data set to the server via the terminal device. Correspondingly, the server receives the first voice data set sent by the terminal device.

S103: The server inputs the first voice data set of the user into the voice cloning model, where the voice cloning model generates a third voice data set based on the first voice data set, the third voice data set includes one or more third voices, and at least one of timbre, voice prosody, a pronunciation manner, and an articulation manner of the third voice is the same as that of the first voice of the user.

A voice cloning algorithm is set in the voice cloning model, and the voice cloning model is used to clone, by using the voice cloning algorithm, a voice input into the voice cloning model, to obtain a voice similar to the input voice.

The server inputs the first voice data set of the user into the voice cloning model, and the voice cloning model performs cloning based on the first voice in the first voice data set, to obtain the third voice data set, where at least one of the timbre, voice prosody, pronunciation manner, and articulation manner of the third voice in the third voice data set is the same as that of the first voice of the user. The voice prosody includes a tone, a volume, a rhythm, intonation, and the like in a voice.

S104: The server trains the voice cloning model based on the third voice data set and the trained acoustic feedback unit, and obtains a trained voice cloning model.

The voice cloning model is used to clone an input voice to obtain a cloned voice, and the trained acoustic feedback unit is used to score the cloned voice. A process of training the voice cloning model is actually a process of performing reinforcement learning and training on the acoustic feedback unit and the voice cloning model. As reinforcement learning and training are performed on the acoustic feedback unit and the voice cloning model, the voice cloning model can output a voice that meets a requirement of the user, thereby obtaining the trained voice cloning model.

The following describes the process of training the voice cloning model.

The third voice data set is input into the trained acoustic feedback unit. The trained acoustic feedback unit scores the third voice included in the third voice data set, outputs a scoring result, and then inputs the scoring result into the voice cloning model. The voice cloning model optimizes the third voice based on a result of scoring the third voice, to obtain an optimized voice. The optimized voice is input into the trained acoustic feedback unit, and the trained acoustic feedback unit scores the optimized voice again, to obtain a result of scoring the optimized voice. The voice cloning model generates an optimized voice in a new round again based on the result of scoring the optimized voice. The rest can be deduced by analogy, and the training is stopped until a generated optimized voice meets the user requirements, for example, until a result of scoring the generated optimized voice exceeds a threshold score, to obtain the trained voice cloning model. The threshold score may be freely set based on an actual situation. For example, if a full score is 5 points, the threshold score may be set to 4 points or 4.5 points.

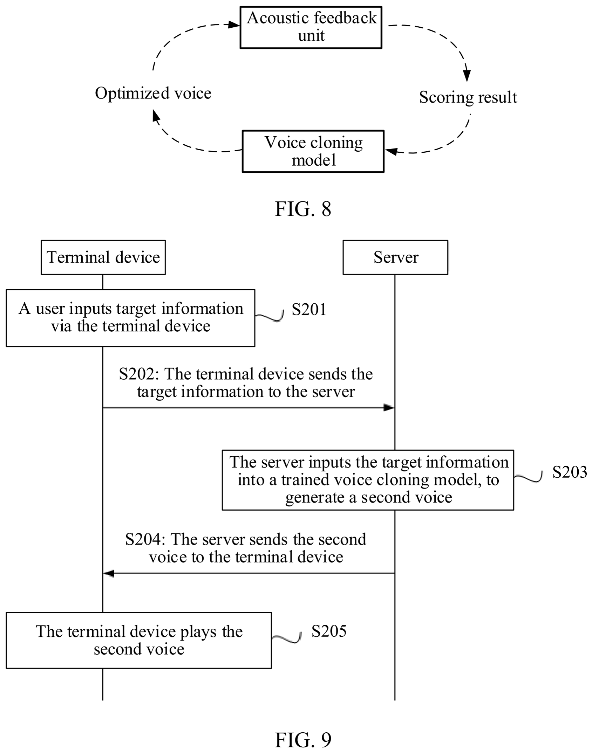

Therefore, training of the voice cloning model includes a plurality of rounds of iterations. Refer to a diagram in FIG. 8. In each round of iterative training, an optimized voice generated by the voice cloning model in a previous round of iterative training is input into the trained acoustic feedback unit. The acoustic feedback unit scores the optimized voice generated by the voice cloning model in the previous round of iterative training, and outputs a scoring result. The voice cloning model performs optimization based on the scoring result, to obtain an optimized voice in this round, where the optimized voice in this round (an output of the voice cloning model in this round) is used as an input of the acoustic feedback unit in a next round of iterative training. For a 1^{st} round of iterative training, an input of the acoustic feedback unit is the third voice. In each round of iterative training, an optimized voice output by the voice cloning model may include one or more optimized voices. When the optimized voice output by the voice cloning model includes a plurality of optimized voices, in a next round of iterative training, the acoustic feedback unit needs to score each of the plurality of optimized voices, and then input a result of scoring each optimized voice into the voice cloning model. The voice cloning model performs optimization based on each optimized voice and the corresponding result of scoring each optimized voice, and generates a batch of new optimized voices. The rest can be deduced by analogy, and the training is stopped until results of scoring, by the acoustic feedback unit, optimized voices that are in a batch of new optimized voices generated by the voice cloning model and that are of a preset quantity exceed the threshold score, to obtain the trained voice cloning model. The preset quantity may be one, or may be a quantity of a plurality of or all of the batch of new optimized voices. A specific value of the preset quantity may be specifically set based on actual application requirements. This is not limited in this application.

Optionally, in the voice cloning model, a scoring result output by the acoustic feedback unit is used as a parameter in a loss function of the voice cloning model, and the scoring result is used to influence the voice cloning model in generating an optimized voice in a current round of iterative training.

It can be learned that, in this application, the voice cloning model is obtained through training based on the first voice data set of the user, the feedback information input by the user, and the results of scoring the plurality of pieces of reference audio by the user, where the plurality of pieces of reference audio are determined based on the feedback information input by the user. In other words, in a process of training the voice cloning model, willingness of the user is taken into consideration, including preference and auditory feeling of the user for different pieces of audio. In addition, a usage scenario of a voice, a language used by the voice, and the like are also taken into consideration. Therefore, the voice cloning model provided in this application can better meet user requirements, and a voice obtained by using the voice cloning model can better match user's auditory feeling.

It may be understood that, a process of training the voice cloning model by the server is actually a process in which the server establishes, based on the first voice data set of the user, a mapping relationship between text corresponding to the first voice data set of the user and a voice feature that matches the auditory feeling/willingness of the user. In other words, the trained voice cloning model stores the mapping relationship between the text corresponding to the first voice data set of the user and the voice feature that matches the auditory feeling/willingness of the user. Therefore, the trained voice cloning model may output, based on text input by the user and the stored mapping relationship, a voice that matches the auditory feeling/willingness of the user.

In step S101 to step S104, the process of training the voice cloning model is described. In an implementation, before the voice cloning model is trained, the first voice data set of the user and the text corresponding to the first voice data set need to be obtained. In the process of training the voice cloning model, the mapping relationship between the text corresponding to the first voice data set and the voice feature that matches the auditory feeling/willingness of the user is established based on the first voice data set. In another implementation, the voice cloning model has a voice recognition function, and can recognize, based on the first voice data set, the text corresponding to the first voice data set. Therefore, before the voice cloning model is trained, only the first voice data set of the user needs to be obtained, and the voice cloning model determines, based on the first voice data set, the text corresponding to the first voice data set. In the process of training the voice cloning model, the mapping relationship between the text corresponding to the first voice data set and the voice feature that matches the auditory feeling/willingness of the user is established based on the first voice data set.

After the trained voice cloning model is obtained, the voice cloning model may be used in any one or more of an audiobook scenario, a virtual human field, or a video creation field. The voice cloning model includes the mapping relationship between the text corresponding to the first voice data set and the voice feature that matches the auditory feeling/willingness of the user. The server may input, into the trained voice cloning model, text information input by the user, to generate a voice, where text corresponding to the voice is text input by the user.

It can be learned that, in this application, in the process of training the voice cloning model, a requirement of the user and preference of the user are taken into consideration, and the feedback information input by the user and the results of scoring the plurality of pieces of reference audio by the user are added to the process of training the voice cloning model, so that the voice cloning model obtained through training can better meet the user requirements, and a second voice that is obtained by processing, by using the trained voice cloning model, the text information input by the user can better match the auditory feeling of the user.

In addition, a conventional voice cloning model/voice cloning model is directly obtained through training by using a cloning technology based on a recording input by a user. When the user dislikes or is not satisfied with a voice that is generated through cloning by using the trained voice cloning model/the voice cloning model, the user has to record a voice again and retrain the voice cloning model/voice cloning model. This training method is difficult to control and is not provided with a secondary processing capability or an optimization capability. In this application, when a user is not satisfied with or dislikes a voice generated by using a voice cloning model that is obtained through training, the user does not need to record a voice again, and the voice cloning model may be optimized based on the feedback information of the user and the results of scoring the plurality of pieces of reference audio by the user. In other words, the training method provided in this application is provided with a secondary processing capability and an optimization capability.

After the trained voice cloning model is obtained, the trained voice cloning model may be used in a voice synthesis service. FIG. 9 is a schematic flowchart of a method for applying a voice cloning model according to this application. The method includes but is not limited to descriptions of the following content.

S201: A user inputs target information via a terminal device.

The user inputs the target information into the terminal device, and the terminal device receives the target information input by the user.

The target information may exist in the form of a document. For example, the target information may be a document in a txt form, or may be a document in a doc or docx form, or may be a document in a pdf form. Alternatively, the target information may exist in the form of a picture. For example, text may be photographed via the terminal device, or the text is collected via an image collection apparatus, and the collected text is input into the terminal device. A picture format may be a jpeg format, a png format, a tif format, or a bmp format. Alternatively, the target information may exist in another form, for example, a slide form, a form of combining text and an image, a form of combining an image and a slide, or a form of combining text and a slide. An existence form of the target information is not limited in this application.

S202: The terminal device sends the target information to a server. Correspondingly, the server receives the target information input by the user.

S203: The server inputs the target information into the trained voice cloning model, to generate a second voice.

The voice cloning model generates the second voice based on text in the target information and a mapping relationship between text corresponding to a first voice data set and a voice feature that matches auditory feeling/willingness of the user.

The server inputs the target information into the trained voice cloning model, and the server converts the target information into a voice based on the trained voice cloning model, to generate the second voice, where the second voice is a voice that is preferred by the user. For a process of training the voice cloning model, refer to the descriptions in the foregoing method embodiments. For brief description of the specification, details are not described herein again.

S204: The server sends the second voice to the terminal device. Correspondingly, the terminal device receives the second voice sent by the server.

S205: The terminal device plays the second voice.

The terminal device receives the second voice sent by the server, and the terminal device may be configured to play the second voice.

It can be learned that, the second voice that is obtained by processing, by using the trained voice cloning model, text information input by the user can better match the auditory feeling of the user.

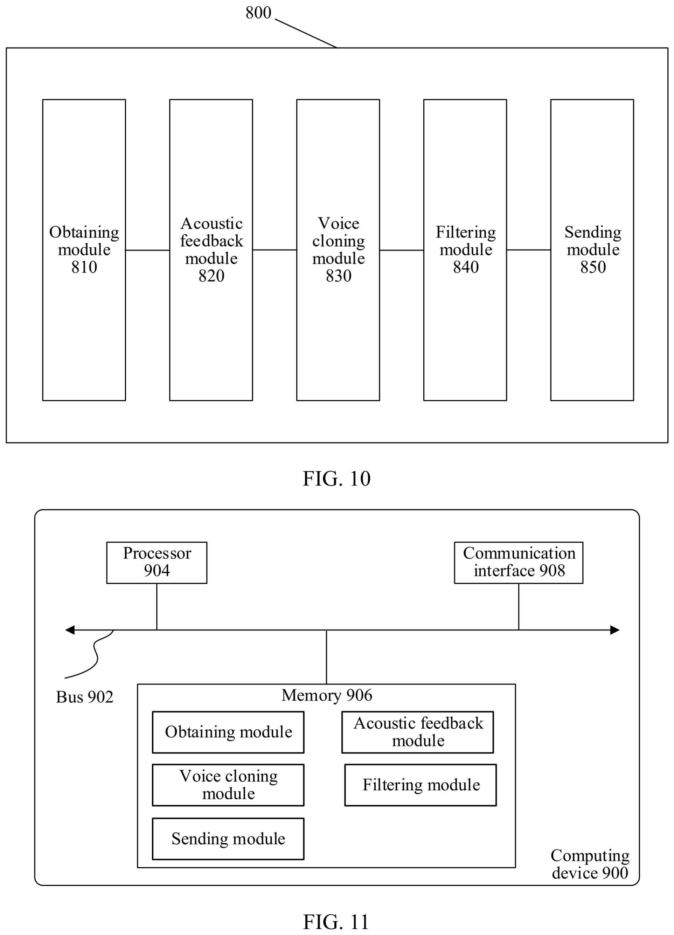

This application provides a voice cloning model generation apparatus 800. FIG. 10 is a diagram of a structure of the voice cloning model generation apparatus 800 according to this application. The voice cloning model generation apparatus 800 may be configured as the server in the method embodiments. The apparatus 800 includes:
an obtaining module 810, configured to obtain results, input by a user via a terminal device, of scoring a plurality of pieces of reference audio;
an acoustic feedback module 820, configured to perform training based on the plurality of pieces of reference audio and the results of scoring the plurality of pieces of reference audio by the user, to obtain an acoustic feedback unit, where the acoustic feedback unit is configured to measure auditory feeling of the user for different pieces of audio, where
the obtaining module 810 is configured to obtain a first voice data set input by the user via the terminal device; and
a voice cloning module 830, configured to: train a voice cloning model based on the first voice data set and the acoustic feedback unit, and obtain a trained voice cloning model.

In a possible implementation, the obtaining module 810 is further configured to obtain feedback information input by the user via the terminal device, where the feedback information includes one or more of an application scenario of the voice cloning model, an emotion category used for the voice cloning model, and a language generated by the voice cloning model. A filtering module 840 is configured to obtain a plurality of pieces of reference audio from an audio library through filtering based on the feedback information. A sending module 850 is configured to send the plurality of pieces of reference audio to the terminal device.

In a possible implementation, the voice cloning model is trained based on the first voice data set and the acoustic feedback unit, including a plurality of rounds of iterative training. In a current round of iterative training, the voice cloning module 830 is configured to generate an optimized voice. The acoustic feedback module 820 is configured to input the optimized voice into the acoustic feedback unit, where the acoustic feedback unit scores the optimized voice to obtain a result of scoring the optimized voice, and the result of scoring the optimized voice is used as an input of the voice cloning model in a next round of iterative training, to influence the voice cloning model in generating an optimized voice in the next round. In a 1^{st} round of iterative training, the optimized voice is generated by the voice cloning model based on the first voice data set.

In a possible implementation, in the current round of iterative training, the result of scoring the optimized voice is used as a parameter in a loss function of the voice cloning model in the next round of iterative training, to influence the loss function of the voice cloning model.

In a possible implementation, the voice cloning model is used in any one or more of an audiobook scenario, a virtual human field, or a video creation field.

In a possible implementation, the obtaining module 810 is further configured to receive target information input by the user, where the target information includes text. The voice cloning module 830 is further configured to input the target information into the trained voice cloning model, to generate a second voice.

In a possible implementation, the target information exists in the form of any one or a combination of a document, a picture, or a slide.

In a possible implementation, results of scoring the plurality of pieces of reference audio include results of scoring all of the plurality of pieces of reference audio in a plurality of dimensions, and the plurality of dimensions include two or more dimensions of timbre, voice prosody, pronunciation, and articulation.

The obtaining module 810, the acoustic feedback module 820, the voice cloning module 830, the filtering module 840, and the sending module 850 each may be implemented by using software, or may be implemented by using hardware. For example, the following uses the voice cloning module 830 as an example to describe an implementation of the voice cloning module 830. Similarly, for implementations of the obtaining module 810, the acoustic feedback module 820, the filtering module 840, and the sending module 850, refer to the implementation of the voice cloning module 830.

As an example of a software functional unit, the voice cloning module 830 may include code that is run on a computing device. The computing device may be a computing device in a cloud service. The computing device may be, for example, a server, a virtual machine, or a container. Further, there may be one or more computing devices. For example, the voice cloning module 830 may include code that is run on a plurality of computing devices. It should be noted that, the plurality of computing devices configured to run the code may be distributed in a same region (region), or may be distributed in different regions. Further, the plurality of computing devices configured to run the code may be distributed in a same availability zone (availability zone, AZ), or may be distributed in different AZs. Each AZ includes one data center or a plurality of data centers that are geographically close to each other. Usually, one region region may include a plurality of availability zones AZs.

Similarly, the plurality of computing devices configured to run the code may be distributed in a same virtual private cloud (virtual private cloud, VPC), or may be distributed in a plurality of VPCs. Usually, one VPC is disposed in one region. A communication gateway needs to be disposed in each VPC for communication between two VPCs in a same region and for cross-region communication between VPCs in different regions. The VPCs are interconnected through the communication gateway.

As an example of a hardware functional unit, the voice cloning module 830 may include at least one computing device. Alternatively, the voice cloning module 830 may be a device implemented by using an application-specific integrated circuit (application-specific integrated circuit, ASIC), a programmable logic device (programmable logic device, PLD), or the like. The PLD may be implemented by using a complex programmable logical device (complex programmable logical device, CPLD), a field programmable gate array (field programmable gate array, FPGA), generic array logic (generic array logic, GAL), or any combination thereof.

The plurality of computing devices included in the voice cloning module 830 may be distributed in a same region, or may be distributed in different regions. The plurality of computing devices included in the voice cloning module 830 may be distributed in a same AZ, or may be distributed in different AZs. Similarly, the plurality of computing devices included in the voice cloning module 830 may be distributed in a same VPC, or may be distributed in a plurality of VPCs. The plurality of computing devices may be any combination of computing devices such as a server, an ASIC, a PLD, a CPLD, an FPGA, and a GAL.

It should be noted that, in another embodiment, the voice cloning module 830 may be configured to perform any step in a voice cloning model generation method, and the obtaining module 810, the acoustic feedback module 820, the filtering module 840, and the sending module 850 each may be configured to perform any step in a voice cloning model generation method. Steps implemented by the obtaining module 810, the acoustic feedback module 820, the voice cloning module 830, the filtering module 840, and the sending module 850 may be specified based on a need. The obtaining module 810, the acoustic feedback module 820, the voice cloning module 830, the filtering module 840, and the sending module 850 respectively implement different steps in a voice cloning model generation method, to implement all functions of the voice cloning model generation apparatus 800.

FIG. 11 is a diagram of a structure of a computing device according to this application. A computing device 900 may be, for example, a server, a virtual machine, a container, or the like. The computing device 900 includes a bus 902, a processor 904, a memory 906, and a communication interface 908. The processor 904, the memory 906, and the communication interface 908 communicate with each other through the bus 902. It should be understood that a quantity of processors and a quantity of memories in the computing device 900 are not limited in this application.

The bus 902 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, only one line is used to represent the bus in FIG. 11, but this does not mean that there is only one bus or only one type of bus. The bus 902 may include a path for transmitting information between components (for example, the memory 906, the processor 904, and the communication interface 908) of the computing device 900.

The processor 904 may include any one or more of processors such as a central processing unit (central processing unit, CPU), a graphics processing unit (graphics processing unit, GPU), a microprocessor (microprocessor, MP), or a digital signal processor (digital signal processor, DSP).

The memory 906 may include a volatile memory (volatile memory), for example, a random access memory (random access memory, RAM). The processor 904 may further include a non-volatile memory (non-volatile memory), for example, a read-only memory (read-only memory, ROM), a flash memory, a hard disk drive (hard disk drive, HDD), or a solid-state drive (solid-state drive, SSD).

The memory 906 stores executable program code, and the processor 904 executes the executable program code to separately implement functions of the foregoing obtaining module 810, acoustic feedback module 820, voice cloning module 830, filtering module 840, and sending module 850, so as to implement a voice cloning model generation method. In other words, the memory 906 stores instructions for performing a voice cloning model generation method.

The communication interface 908 uses a transceiver module, for example, but not limited to, a network interface card or a transceiver, to implement communication between the computing device 900 and another device or a communication network. Optionally, the obtaining module 810 and the sending module 850 may be located in the communication interface 908.

An embodiment of this application further provides a computing device cluster. The computing device cluster includes at least one computing device. The computing device may be a server, a virtual machine, or a container, for example, a central server, an edge server, or a sidecar container.

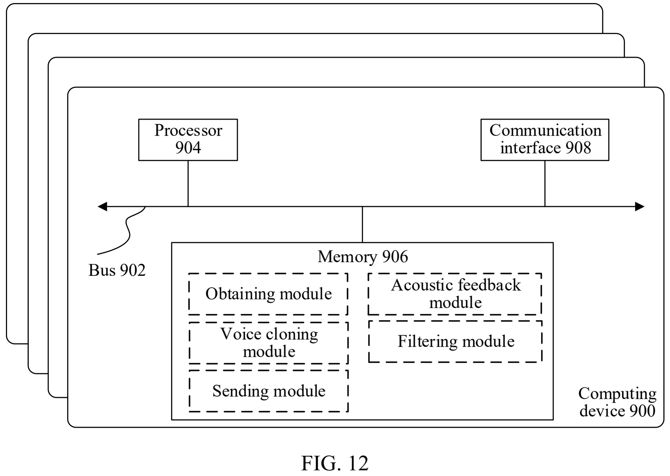

As shown in FIG. 12, FIG. 12 is a diagram of a structure of a computing device cluster according to this application. The computing device cluster includes at least one computing device 900. Memories 906 in one or more computing devices 900 in the computing device cluster may store same instructions for performing a voice cloning model generation method.

In some possible implementations, the memories 906 in the one or more computing devices 900 in the computing device cluster may alternatively separately store some instructions for performing a voice cloning model generation method. In other words, the one or more computing devices 900 may be combined to jointly execute instructions for a voice cloning model generation method.

When at least one computing device in the computing device cluster is configured as the voice cloning model generation apparatus 800, memories 906 in different computing devices 900 in the computing device cluster may store different instructions, which are respectively for performing some functions of the apparatus 800. In other words, instructions stored in the memories 906 in different computing devices 900 may implement functions of one or more of the obtaining module 810, the acoustic feedback module 820, the voice cloning module 830, the filtering module 840, and the sending module 850.

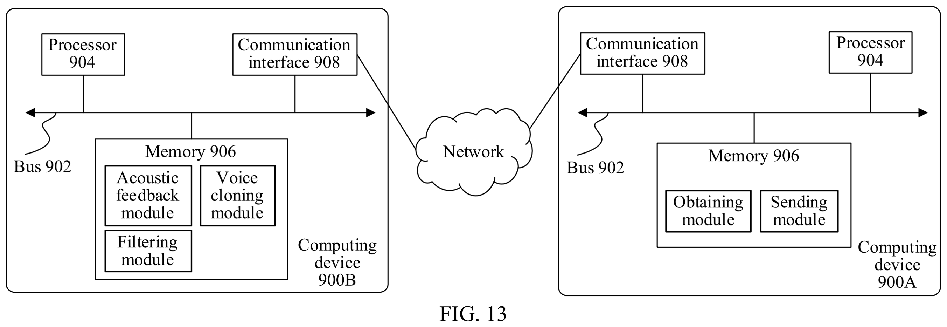

In some possible implementations, one or more computing devices in the computing device cluster may be connected via a network. The network may be a wide area network, a local area network, or the like. FIG. 13 is a diagram of a structure of another computing device cluster. As shown in FIG. 13, two computing devices 900A and 900B are connected via a network. Specifically, each computing device is connected to the network through a communication interface in the computing device. In such a possible implementation, a memory 906 in the computing device 900A stores instructions for functions of the obtaining module 810 and the sending module 850. The computing device 900A is configured to receive information that is sent by a user via a terminal device, for example, a first voice data set of the user, target information, feedback information input by the user, and results of scoring a plurality of pieces of reference audio by the user. The computing device 900A is further configured to send information to the terminal device, for example, send the plurality of pieces of reference audio and the like to the terminal device. A memory 906 in the computing device 900B stores instructions for performing functions of the acoustic feedback module 820, the voice cloning module 830, and the filtering module 840. The computing device 900B is configured to process the information obtained by 900A, for example, train a voice cloning model based on the feedback information input by the user and the result of scoring the plurality of pieces of reference audio by the user, and obtain a trained voice cloning model, and for another example, generate a second voice based on target information input by the user and the trained voice cloning model.

It should be understood that a function of the computing device 900A shown in FIG. 13 may alternatively be completed by a plurality of computing devices 900, or the computing device cluster includes a plurality of computing devices that have a same function as the computing device 900A. Similarly, a function of the computing device 900B may alternatively be completed by a plurality of computing devices 900, or the computing device cluster includes a plurality of computing devices that have a same function as the computing device 900B.

An embodiment of this application further provides another computing device cluster. For a connection relationship between computing devices in the computing device cluster, refer to the connection manners of the computing device clusters in FIG. 12 and FIG. 13. A difference lies in that memories 906 in one or more computing devices 900 in the computing device cluster may store different instructions for performing a voice cloning model generation method. In some possible implementations, the memories 906 in the one or more computing devices 900 in the computing device cluster may alternatively separately store some instructions for performing a voice cloning model generation method. In other words, the one or more computing devices 900 may be combined to jointly execute instructions for performing a voice cloning model generation method.

An embodiment of this application further provides a computer program product including instructions. The computer program product may be software or a program product that includes the instructions, or that can run on a computing device or can be stored in any usable medium. When the computer program product runs on at least one computing device, the at least one computing device is enabled to perform a voice cloning model generation method.

An embodiment of this application further provides a computer-readable storage medium. The computer-readable storage medium may be any usable medium that can be stored by a computing device, or a data storage device, for example, a data center, including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions, and the instructions instruct a computing device or a computing device cluster to perform a voice cloning model generation method.

The foregoing embodiments are merely intended to describe the technical solutions of the present invention, but not intended to limit the present invention. Although the present invention is described in detail with reference to the foregoing embodiments, persons of ordinary skill in the art should understand that they may still make modifications to the technical solutions described in the foregoing embodiments or make equivalent replacements to some technical features thereof. Such modifications or replacements do not cause the essence of the corresponding technical solutions to depart from the protection scope of the technical solutions of embodiments of the present invention.

## Claims

1. A voice cloning model generation method, comprising:
obtaining results, input by a user via a terminal device, of scoring a plurality of pieces of reference audio;
performing training based on the plurality of pieces of reference audio and the results of scoring the plurality of pieces of reference audio by the user, to obtain an acoustic feedback unit, wherein the acoustic feedback unit is configured to measure auditory feeling of the user for different pieces of audio;
obtaining a first voice data set that is input by the user via the terminal device; and
training a voice cloning model based on the first voice data set and the acoustic feedback unit, and obtaining a trained voice cloning model.

2. The method according to claim 1, wherein before the obtaining the results, input by the user via the terminal device, of scoring the plurality of pieces of reference audio, the method further comprises:
obtaining feedback information input by the user via the terminal device, wherein the feedback information comprises one or more of an application scenario of the voice cloning model, an emotion category used for the voice cloning model, and a language generated by the voice cloning model;
obtaining the plurality of pieces of reference audio from an audio library through filtering based on the feedback information; and
sending the plurality of pieces of reference audio to the terminal device.

3. The method according to claim 1 or 2, wherein the training the voice cloning model based on the first voice data set and the acoustic feedback unit comprises a plurality of rounds of iterative training, wherein
in a current round of iterative training,
the voice cloning model generates an optimized voice; and
the optimized voice is input into the acoustic feedback unit, wherein the acoustic feedback unit scores the optimized voice to obtain a result of scoring the optimized voice, and the result of scoring the optimized voice is used as an input of the voice cloning model in a next round of iterative training, to influence the voice cloning model in generating an optimized voice in the next round, wherein
in a 1^{st} round of iterative training, the optimized voice is generated by the voice cloning model based on the first voice data set.

4. The method according to claim 3, wherein in the current round of iterative training, the result of scoring the optimized voice is used as a parameter in a loss function of the voice cloning model in the next round of iterative training, to influence the loss function of the voice cloning model.

5. The method according to any one of claims 1 to 4, wherein the voice cloning model is used in any one or more of an audiobook scenario, a virtual human field, or a video creation field.

6. The method according to any one of claims 1 to 5, wherein after the obtaining the trained voice cloning model, the method further comprises:
receiving, by the server, target information input by the user, wherein the target information comprises text; and
inputting the target information into the trained voice cloning model, to generate a second voice.

7. The method according to claim 6, wherein the target information exists in the form of any one or a combination of a document, a picture, and a slide.

8. The method according to any one of claims 1 to 7, wherein the results of scoring the plurality of pieces of reference audio comprise results of scoring all of the plurality of pieces of reference audio in a plurality of dimensions, and the plurality of dimensions comprise two or more dimensions of timbre, voice prosody, pronunciation, and articulation.

9. A voice cloning model generation apparatus, comprising:
an obtaining module, configured to obtain results, input by a user via a terminal device, of scoring a plurality of pieces of reference audio;
an acoustic feedback module, configured to perform training based on the plurality of pieces of reference audio and the results of scoring the plurality of pieces of reference audio by the user, to obtain an acoustic feedback unit, wherein the acoustic feedback unit is configured to measure auditory feeling of the user for different pieces of audio, wherein
the obtaining module is configured to obtain a first voice data set that is input by the user via the terminal device; and
a voice cloning module, configured to: train a voice cloning model based on the first voice data set and the acoustic feedback unit, and obtain a trained voice cloning model.

10. The apparatus according to claim 9, wherein
the obtaining module is further configured to obtain feedback information input by the user via the terminal device, wherein the feedback information comprises one or more of an application scenario of the voice cloning model, an emotion category used for the voice cloning model, and a language generated by the voice cloning model;
a filtering module is configured to obtain the plurality of pieces of reference audio from an audio library through filtering based on the feedback information; and
a sending module is configured to send the plurality of pieces of reference audio to the terminal device.

11. The apparatus according to claim 9 or 10, wherein the training the voice cloning model based on the first voice data set and the acoustic feedback unit comprises a plurality of rounds of iterative training, wherein
in a current round of iterative training,
the voice cloning module is configured to generate an optimized voice; and
the acoustic feedback module is configured to input the optimized voice into the acoustic feedback unit, wherein the acoustic feedback unit scores the optimized voice to obtain a result of scoring the optimized voice, and the result of scoring the optimized voice is used as an input of the voice cloning model in a next round of iterative training, to influence the voice cloning model in generating an optimized voice in the next round, wherein
in a 1^{st} round of iterative training, the optimized voice is generated by the voice cloning model based on the first voice data set.

12. The apparatus according to claim 11, wherein in the current round of iterative training, the result of scoring the optimized voice is used as a parameter in a loss function of the voice cloning model in the next round of iterative training, to influence the loss function of the voice cloning model.

13. The apparatus according to any one of claims 9 to 12, wherein the voice cloning model is used in any one or more of an audiobook scenario, a virtual human field, or a video creation field.

14. The apparatus according to any one of claims 9 to 13, wherein
the obtaining module is further configured to receive target information input by the user, wherein the target information comprises text; and
the voice cloning module is further configured to input the target information into the trained voice cloning model, to generate a second voice.

15. The apparatus according to claim 14, wherein the target information exists in the form of any one or a combination of a document, a picture, and a slide.

16. The apparatus according to any one of claims 9 to 15, wherein the results of scoring the plurality of pieces of reference audio comprise results of scoring all of the plurality of pieces of reference audio in a plurality of dimensions, and the plurality of dimensions comprise two or more dimensions of timbre, voice prosody, pronunciation, and articulation.

17. A computing device cluster, comprising at least one computing device, wherein the at least one computing device each comprises a processor and a memory, and the processor of the at least one computing device is configured to execute instructions stored in the memory of the at least one computing device, to enable the computing device cluster to perform the method according to any one of claims 1 to 8.

18. A computer storage medium, comprising program instructions, wherein when the program instructions are executed on a computing device cluster, the computing device cluster is enabled to perform the method according to any one of claims 1 to 8.

19. A computer program product, comprising program instructions, wherein when the program instructions are executed on a computing device cluster, the computing device cluster is enabled to perform the method according to any one of claims 1 to 8.
